# EUROPEAN PATENT APPLICATION

(11) **EP 4 155 811 A1**
(43) Date of publication of application: **29.03.2023**
(21) Application number: 21807834.3
(22) Date of filing: 10.05.2021
(51) Int. Cl.: G02B 27/01, B60K 35/00, G02B 30/31, H04N 13/315

(54) **IMAGE DISPLAY MODULE**

(30) Priority: 20.05.2020 JP 2020088396
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); HASHIMOTO, Sunao, Kyoto-shi, Kyoto 612-8501 (JP)
(74) Representative: TBK
(86) International application number: PCT/JP2021/017670
(87) International publication number: WO 2021/235255

(57) **Abstract**

A three-dimensional (3D) projector (12) includes a 3D display device (17) and a camera (11). The 3D display device (17) includes a backlight (19), a display (20) including a display surface (20a), a barrier (21), and a controller (24). The camera (11) has an imaging direction that may be a direction of the image light emitted from the display (20) or may be different from the direction of the image light. With the imaging direction of the camera (11) being different from the direction of the image light, the controller (24) performs a process to correct distortion on a captured image output from the camera (11) with reference to the direction of the image light.

## Description

### TECHNICAL FIELD

The present disclosure relates to an image display module.

### BACKGROUND OF INVENTION

A known technique is described in, for example, Patent Literature 1.

### CITATION LIST

### PATENT LITERATURE

Patent Literature 1: Japanese Unexamined Patent Application Publication No. 6-230132

### SUMMARY

In one embodiment of the present disclosure, an image display module is used for a head-up display. The image display module includes a housing, a display, a barrier, and a camera. The housing includes an opening defining an eye box. The display is located in the housing. The display displays a parallax image projected toward a first eye and a second eye of a user. The barrier is located in the housing. The barrier defines image light of the parallax image to generate parallax between the first eye and the second eye. The camera is located in the housing. The camera captures an image of at least one of the first eye or the second eye of the user. The camera has an imaging direction being a direction of the image light.

In one embodiment of the present disclosure, an image display module is used for a head-up display. The image display module includes a housing, a display, a barrier, a camera, and a controller. The housing includes an opening defining an eye box. The display is located in the housing. The display displays a parallax image projected toward a first eye and a second eye of a user. The barrier is located in the housing. The barrier defines image light of the parallax image to generate parallax between the first eye and the second eye. The camera is located in the housing. The camera captures an image of at least one of the first eye or the second eye of the user. The camera has an imaging direction being different from a direction of the image light. The controller corrects distortion in a captured image captured with the camera with reference to the direction of light of the parallax image.

### BRIEF DESCRIPTION OF THE DRAWINGS

The objects, features, and advantages of the present disclosure will become more apparent from the following detailed description and the drawings.
FIG. 1 is a schematic diagram of an example movable body incorporating a three-dimensional (3D) projector.
FIG. 2 is a schematic diagram of an example 3D projector.
FIG. 3 is a schematic diagram describing the relationship between the eyes of a driver, a display, and a barrier.
FIG. 4 is a schematic diagram illustrating the position of a camera.
FIG. 5A is a schematic diagram illustrating the position of the camera.
FIG. 5B is a schematic cross-sectional view illustrating the position of the camera.
FIG. 6 is a schematic diagram illustrating the position of the camera.
FIG. 7 is a schematic diagram of the internal structure of the camera.
FIG. 8 is a schematic diagram illustrating light focused on an image sensor.

### DESCRIPTION OF EMBODIMENTS

A known image display apparatus mounted on a vehicle that forms the basis of one or more embodiments of the present disclosure captures an image of a driver's face with a camera and displays an image in accordance with information about, for example, the driver's eyes or gaze direction.

An embodiment of the present disclosure will now be described in detail with reference to the drawings. The drawings used herein are schematic and are not drawn to scale relative to the actual size of each component.

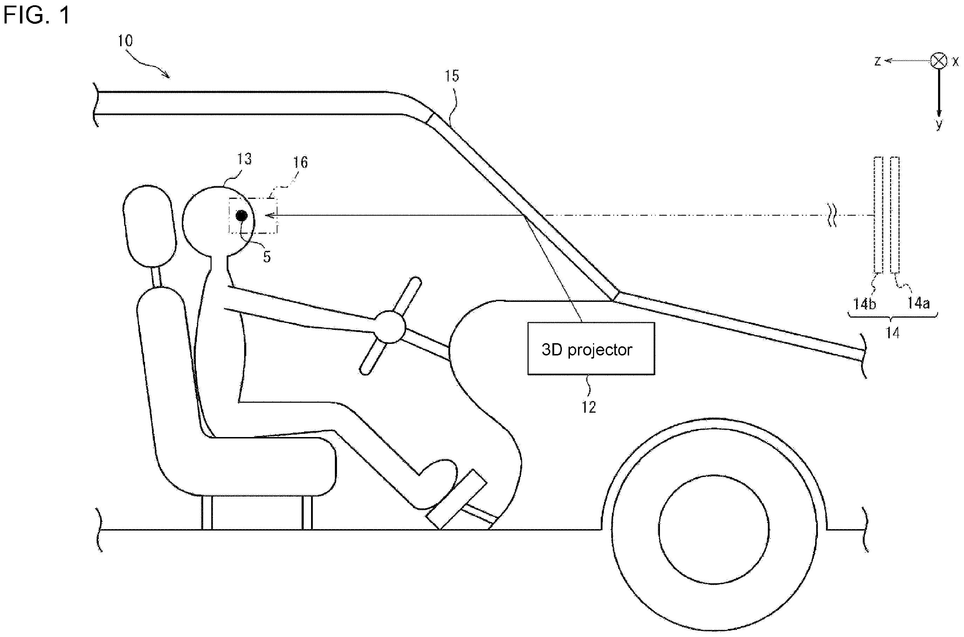

As illustrated in FIG. 1, a three-dimensional (3D) projector 12 according to one embodiment of the present disclosure is incorporated in a movable body 10. In one or more embodiments of the present disclosure, examples of the movable body include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle may include man-powered vehicles. The classification of the vehicle is not limited to the above examples. Examples of the automobile include an industrial vehicle traveling on a road. One type of vehicle may fall within multiple classes. Examples of the vessel include a jet ski, a boat, and a tanker. Examples of the aircraft include a fixed-wing aircraft and a rotary-wing aircraft.

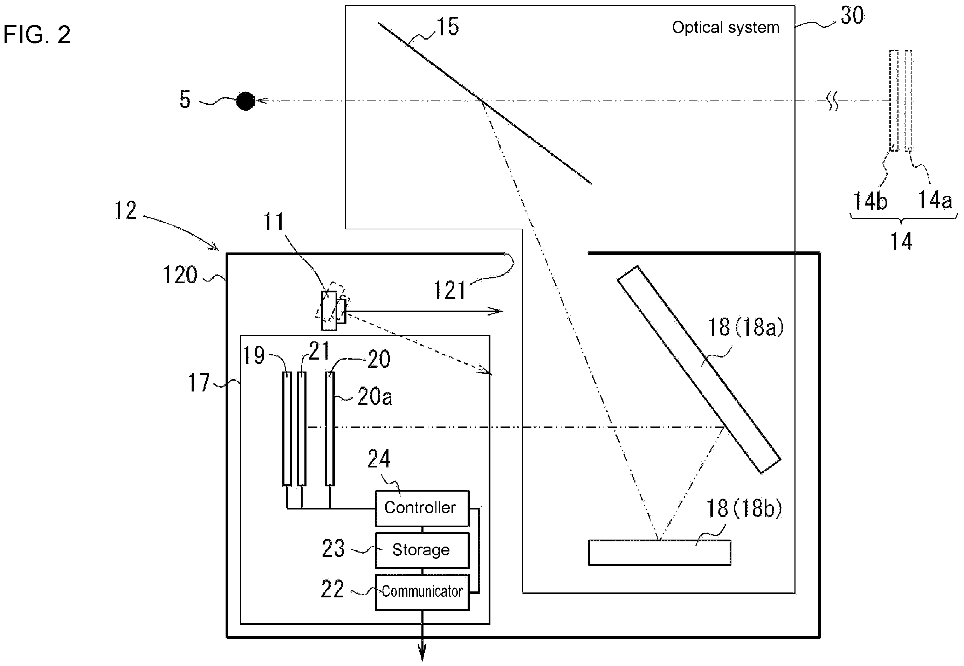

In the example described below, the movable body 10 is a passenger vehicle. The movable body 10 may be any of the above examples instead of a passenger vehicle. As illustrated in FIG. 2, the 3D projector 12 includes a 3D display device 17 and a camera 11. The 3D projector 12 may further include an optical element 18. The 3D projector 12 is also referred to as an image display module. The 3D display device 17 includes a backlight 19, a display 20 including a display surface 20a, a barrier 21, and a controller 24. The 3D display device 17 may further include a communicator 22. The 3D display device 17 may further include a storage 23. The 3D projector 12 may include, for example, a housing 120. The housing 120 accommodates the 3D display device 17, the camera 11, and the optical element 18.

The 3D projector 12, which is either retrofitted to a vehicle or is assembled in manufacturing the vehicle, includes its main components accommodated in the housing 120 and is thus easy to handle in mounting on a vehicle. The camera 11 is also accommodated in the housing 120 at a predetermined position. The camera 11 uses positional alignment for being mounted outside the housing 120 on the vehicle independently of other components. The camera 11 accommodated in the housing 120 as in the 3D projector 12 according to one or more embodiments of the present disclosure is mountable on the vehicle together with the other components of the 3D projector 12. The 3D projector 12 may be at any position inside or outside the movable body 10. For example, the 3D projector 12 may be inside a dashboard in the movable body 10. The 3D projector 12 emits image light toward a windshield 15. The image light may be emitted through, for example, an opening 121 in the housing 120.

The windshield 15 reflects image light emitted from the 3D projector 12. The image light reflected from the windshield 15 reaches an eye box 16. The eye box 16 is an area in a real space in which the eyes 5 of a driver 13 are expected to be based on, for example, the body shape, posture, and changes in the posture of the driver 13. The eye box 16 may have any shape. The eye box 16 may include a planar area or a 3D area. The opening 121 in the housing 120 defines the eye box 16. The solid arrow in FIG. 1 indicates a path traveled by at least a part of image light emitted from the 3D projector 12 to reach the eye box 16. The path traveled by image light is also referred to as an optical path. With the eyes 5 of the driver 13 located in the eye box 16 receiving image light, the driver 13 can view a virtual image 14. The virtual image 14 is on the dot-dash line extending frontward from the path in alignment with the path from the windshield 15 to the eyes 5. The 3D projector 12 can function as a head-up display that allows the driver 13 to view the virtual image 14. In FIG. 1, the direction in which the eyes 5 of the driver 13 are aligned corresponds to x-direction. The vertical direction corresponds to y-direction. The imaging range of the camera 11 includes the eye box 16.

The optical element 18 may include a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The dot-dash arrow in FIG. 2 indicates a path traveled by at least a part of image light emitted from the 3D display device 17 to be reflected from the first mirror 18a and the second mirror 18b and then exit the 3D projector 12. The image light emitted from the 3D projector 12 reaches the windshield 15, is reflected from the windshield 15, and then reaches the eyes 5 of the driver 13. This allows the driver 13 to view the image displayed by the 3D display device 17.

The optical element 18 and the windshield 15 allow image light emitted from the 3D display device 17 to reach the eyes 5 of the driver 13. The optical element 18 and the windshield 15 may form an optical system 30. In other words, the optical system 30 includes the optical element 18 and the windshield 15. The optical system 30 allows image light emitted from the 3D display device 17 to travel along the optical path indicated by the dot-dash line and reach the eyes 5 of the driver 13. The optical system 30 may control the traveling direction of image light to magnify or reduce an image viewable by the driver 13. The optical system 30 may control the traveling direction of image light to deform an image viewable by the driver 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens instead of a mirror. The lens may be a concave lens or a convex lens. The lens may be at least partially spherical or aspherical.

The backlight 19 is more away from the driver 13 than the display 20 and the barrier 21 are on the optical path of image light. The backlight 19 emits light toward the barrier 21 and the display 20. At least a part of light emitted from the backlight 19 travels along the optical path indicated by the dot-dash line and reaches the eyes 5 of the driver 13. The backlight 19 may include a light-emitting diode (LED) or a light emitter such as an organic electroluminescent (EL) element and an inorganic EL element. The backlight 19 may have any structure that allows control of the light intensity and the light intensity distribution.

The display 20 includes a display panel. The display 20 may be, for example, a liquid-crystal device such as a liquid-crystal display (LCD). In the present embodiment, the display 20 includes a transmissive LCD display panel. The display 20 is not limited to this, and may include any of various display panels.

The display 20 includes multiple pixels and controls the transmittance of light from the backlight 19 incident on each pixel to emit the incident light as image light reaching the eyes 5 of the driver 13. The driver 13 views an image formed by image light emitted from each pixel in the display 20. The image formed by the image light includes a parallax image projected toward a first eye and a second eye of the driver 13.

The barrier 21 defines the traveling direction of incident light. With the barrier 21 closer to the backlight 19 than to the display 20, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in a direction defined by the barrier 21 as image light traveling in the same direction. With the display 20 closer to the backlight 19 than to the barrier 21, light emitted from the backlight 19 enters the display 20 and then enters the barrier 21. In this case, the barrier 21 blocks or attenuates a part of image light emitted from the display 20 and transmits another part of the image light to the eyes 5 of the driver 13.

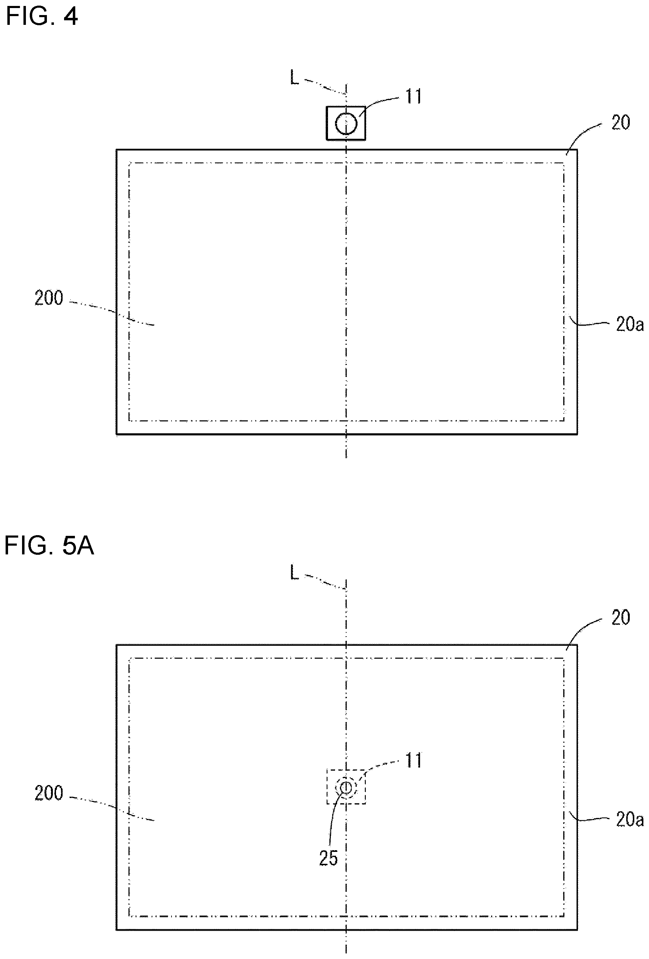

Irrespective of whether the display 20 or the barrier 21 is closer to the driver 13, the barrier 21 can control the traveling direction of image light. The barrier 21 allows a part of image light emitted from the display 20 to reach one of a left eye (first eye) 5L and a right eye (second eye) 5R (refer to FIG. 4) of the driver 13, and another part of the image light to reach the other of the left eye 5L and the right eye 5R of the driver 13. In other words, the barrier 21 directs at least a part of image light toward the left eye 5L of the driver 13 and toward the right eye 5R of the driver 13. The left eye 5L is also referred to as the first eye, and the right eye 5R as the second eye. In the present embodiment, the barrier 21 is located between the backlight 19 and the display 20. In other words, light emitted from the backlight 19 first enters the barrier 21 and then enters the display 20.

The barrier 21 defines the traveling direction of image light to allow each of the left eye 5L and the right eye 5R of the driver 13 to receive different image light. Each of the left eye 5L and the right eye 5R of the driver 13 can thus view a different image.

As described above, the camera 11 is accommodated in the housing 120, similarly to the 3D display device 17. The camera 11 does not directly capture an image of the face and the eyes 5 of the driver 13, but captures an image using light from a subject that travels along the same optical path as the image light emitted from the 3D projector 12. The light used by the camera 11 for capturing an image is light reflected from the driver 13 as the subject and travels in a direction opposite to the traveling direction of the image light. The camera 11 may capture an image of the eyes 5 of the driver 13 through the windshield 15.

Thus, the camera 11 in the housing 120 captures an image of the eyes 5 of the driver 13 of the movable body 10. In the present embodiment, the camera 11 in the 3D projector 12 may have the imaging direction being the direction of the image light emitted from the display 20. The camera 11 has the imaging direction being along the optical axis of the camera 11 and toward the subject. In other words, the imaging direction is along the optical axis of the camera 11 and opposite to incident light.

The camera 11 may be a visible light camera or an infrared camera. The camera 11 may function both as a visible light camera and an infrared camera. The camera 11 may include, for example, a charge-coupled device (CCD) image sensor or a complementary metal-oxide semiconductor (CMOS) image sensor.

The image captured with the camera 11 is output to the 3D display device 17. In the 3D display device 17, the controller 24 detects the positions of the eyes 5 of the driver 13 based on the captured image output from the camera 11. The controller 24 may control a parallax image to be projected based on the information about the detected positions of the eyes 5. The controller 24 may control the display 20 and the barrier 21 based on the information about the positions of the eyes 5.

The camera 11 may be accommodated in the housing 120, similarly to the 3D display device 17, and the camera 11 may have the imaging direction being different from the direction of the image light. In this case, the camera 11 has the imaging direction not being the direction of the image light, and the image captured with the camera 11 includes distortion. The controller 24 performs a process to correct distortion on the captured image output from the camera 11 with reference to the direction of the image light. Any known correction process may be used as a distortion correction process for the captured image. The controller 24, after performing the distortion correction process on the captured image, may detect the positions of the eyes 5 of the driver 13 based on the corrected captured image.

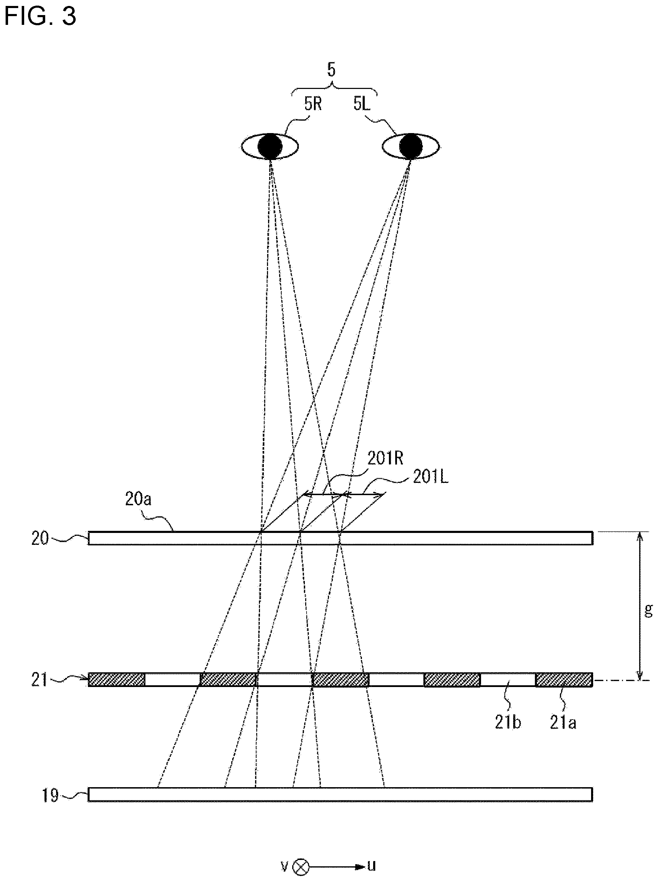

As illustrated in FIG. 3, the display 20 includes left-eye viewing areas 201L viewable by the left eye 5L of the driver 13 and right-eye viewing areas 201R viewable by the right eye 5R of the driver 13 on the display surface 20a. The display 20 displays a parallax image including left-eye images viewable by the left eye 5L of the driver 13 and right-eye images viewable by the right eye 5R of the driver 13. The parallax image refers to an image projected toward the left eye 5L and the right eye 5R of the driver 13 to generate parallax between the two eyes of the driver 13. The display 20 displays left-eye images in the left-eye viewing areas 201L and right-eye images in the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area to display a planar image on the display surface 20a. The planar image generates no parallax between the eyes 5 of the driver 13 and is not viewed stereoscopically.

In the present embodiment, the barrier 21 is more away from the driver 13 than the display 20 is on the optical path of image light. The barrier 21 controls the transmittance of light directed from the backlight 19 to the display 20. Open portions 21b transmit light directed from the backlight 19 to the display 20. Light-blocking portions 21a block light directed from the backlight 19 to the display 20. This structure allows light entering the display 20 to travel in a predetermined direction. Thus, the barrier 21 can control a part of image light to reach the left eye 5L of the driver 13, and another part of the image light to reach the right eye 5R of the driver 13.

The barrier 21 may include a liquid crystal shutter. The liquid crystal shutter can control the transmittance of light in accordance with a voltage applied. The liquid crystal shutter may include multiple pixels and control the transmittance of light for each pixel. The liquid crystal shutter can form a portion with a high light transmittance or a portion with a low light transmittance in an intended shape. The open portions 21b in the barrier 21 including a liquid crystal shutter may have a transmittance of a first predetermined value or greater. The light-blocking portions 21a in the barrier 21 including a liquid crystal shutter may have a transmittance of a second predetermined value or less. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open portions 21b and the light-blocking portions 21a that can shift is also referred to as an active barrier.

Light through the open portions 21b in the barrier 21 is emitted from the display surface 20a of the display 20 as image light and reaches the optical member 15 through the optical element 18. The image light is reflected from the optical member 15 and reaches the eyes 5 of the user 13. This allows the eyes 5 of the user 13 to view a second virtual image 14b located more away in the negative z-direction than the optical member 15. The second virtual image 14b corresponds to the image appearing on the display surface 20a. The open portions 21b and the light-blocking portions 21a in the barrier 21 form a first virtual image 14a in front of the optical member 15 and more away in the negative z-direction than the second virtual image 14b. As illustrated in FIG. 1, the user 13 can view an image with the display 20 appearing to be at the position of the second virtual image 14b and the barrier 21 appearing to be at the position of the first virtual image 14a.

The 3D display device 17 emits image light for the image appearing on the display surface 20a in a direction defined by the barrier 21. The optical element 18 reflects or refracts the image light to direct the light to the windshield 15. The windshield 15 reflects the image light to direct the light to the eyes 5 of the driver 13. The image light entering the eyes 5 of the driver 13 causes the driver 13 to view a parallax image as the virtual image 14. The driver 13 views the virtual image 14 stereoscopically. An image corresponding to the parallax image in the virtual image 14 is also referred to as a parallax virtual image. A parallax virtual image is a parallax image projected through the optical system 30. An image corresponding to the planar image in the virtual image 14 is also referred to as a planar virtual image. A planar virtual image is a planar image projected through the optical system 30.

The controller 24 controls the display 20. The controller 24 may control the barrier 21 that is an active barrier. The controller 24 may control the backlight 19. The controller 24 may obtain, from the camera 11, information about the positions of the eyes 5 of the driver 13, and control the display 20, the barrier 21, or the backlight 19 based on the information. The controller 24 may receive an image output from the camera 11 and detect the eyes 5 of the driver 13 based on the received image. The controller 24 may control the display 20, the barrier 21, or the backlight 19 based on the detected positions of the eyes 5. The controller 24 may be, for example, a processor. The controller 24 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 24 may be either a system on a chip (SoC) or a system in a package (SiP) in which one or more processors cooperate with other components.

The communicator 22 may include an interface that can communicate with an external device. The external device may include, for example, the camera 11. The communicator 22 may obtain information from the camera 11 and output the information to the controller 24. The interface that can perform communication in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the universal serial bus (USB) standard, or a connector used for an RCA terminal. The electric connector may include a connector used for an S terminal specified by EIAJ CP-121aA or a connector used for a D terminal specified by EIAJ RC-5237. The electric connector may include a connector complying with the High-Definition Multimedia Interface (HDMI, registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 8021a. The wireless communication device includes at least one antenna.

The storage 23 may store various information sets or programs for causing the components of the 3D display device 17 to operate. The storage 23 may include, for example, a semiconductor memory. The storage 23 may function as a work memory for the controller 24. The controller 24 may include the storage 23.

The camera 11 may be, in the housing 120, at a reference position in the parallax direction with respect to the display 20. The display surface 20a of the display 20 includes a display area 200 that displays a viewable image. The reference position with respect to the display 20 is, for example, on an imaginary line L extending through the center of the display area 200 in the vertical direction of the display surface 20a. The camera 11 may be at any position on the imaginary line L with the display 20 viewed in the direction of the image light. The position of the camera 11 may be defined by, for example, the optical axis of the camera 11. The camera 11 being on the imaginary line L refers to the optical axis of the camera 11 intersecting with the imaginary line L. The camera 11 may be, on the imaginary line L, above or below the display 20 in its vertical direction. The camera 11 may be at one of a position above or a position below the display 20 in the vertical direction. In other words, the camera 11 may be above the display 20. The camera 11 may be at the other one of the position above or the position below the display 20 in the vertical direction. In other words, the camera 11 may be located below the display 20.

In the embodiment in FIG. 4, the camera 11 is located on the imaginary line Land above the display 20. The camera 11 uses light reflected from the second mirror 18b to capture an image of the eyes 5 of the driver 13, and may be at a reference position close to the display 20. With the camera 11 being close to the display 20, the 3D projector 12 is more easily downsized than with a camera being farther away from the display 20. The same applies when the camera 11 is located below the display 20.

The camera 11 may capture an image from within the display area 200 of the display 20. The display area 200 may have, for example, a notch on its edge to allow the camera 11 to capture an image through the notch. The display area 200 may have, for example, a punched through-hole that allows the camera 11 to capture an image through the through-hole. In such structures, the camera 11 may be at a reference position on the imaginary line L and on the rear of the display 20. The camera 11 may capture an image from the rear of the display 20 through the notch or the through-hole.

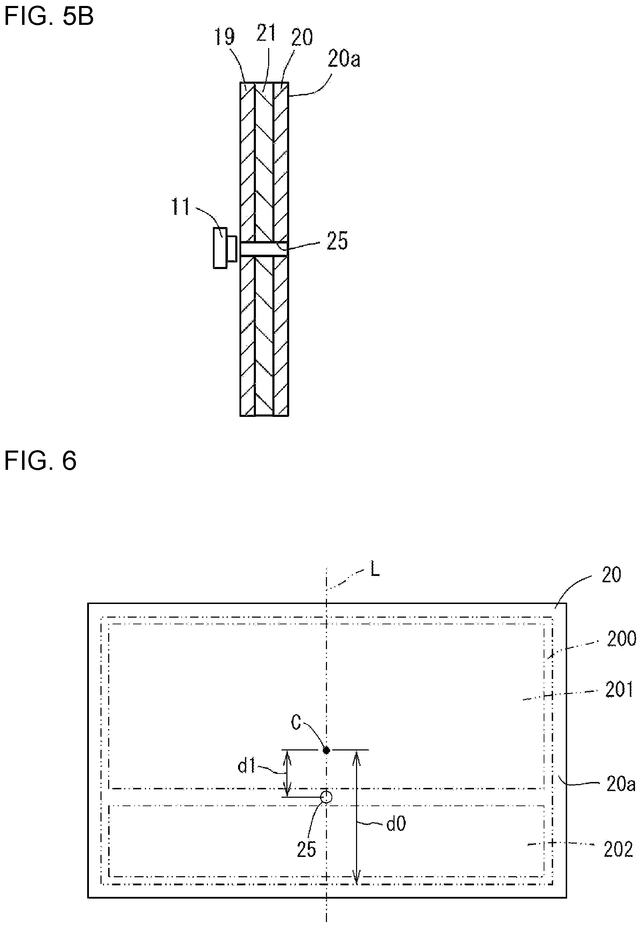

In a punched-hole structure in an embodiment in FIG. SA, the camera 11 can capture an image through a through-hole 25 in the display area 200. In the present embodiment, the through-hole 25 in the display 20 is located at the center of the display area 200. The through-hole 25 in the display 20 may be off the center of the display area. In a display device with an integrated structure including the display 20, the barrier 21, and the backlight 19, a through-hole 25 may extend through the display 20, the barrier 21, and the backlight 19 as illustrated in the cross-sectional view in FIG. 5B. The camera 11 may be located on the rear of the display device, or specifically, the rear of the backlight 19, and may capture an image through the through-hole 25 extending through the entire display device. When the display 20, the barrier 21, and the backlight 19 are not integrated, for example, the display 20 may have a through-hole 25 to allow the camera 11 to be between the display 20 and the barrier 21 to capture an image through the through-hole 25. For example, a through-hole 25 may extend through the display 20 and the barrier 21, and the camera 11 may be located between the barrier 21 and the backlight 19 to capture an image through the through-hole 25.

The display 20 may display a planar image to be projected toward the eyes 5 (the left eye 5L and the right eye 5R) of the driver 13. The display surface 20a of the display 20 may include a first area 201 that displays a parallax image and a second area 202 that displays a planar image. The display area 200 includes the first area 201 and the second area 202. The first area 201 that displays a parallax image includes the left-eye viewing areas 201L and the right-eye viewing areas 201R described above. The through-hole 25 in the display 20 may be located between the first area 201 and the second area 202 within the display area 200.

The through-hole 25 may be located on an imaginary line extending through the center of the display area 200 in the vertical direction (the same as the imaginary line). In this case, a distance d0 is the distance from a center C of the display area 200 to the point of intersection between the imaginary line and the periphery of the display area 200, and a distance d1 is the distance from the center C of the display area 200 to the through-hole 25. The distance d0 is half the height (vertical length) of the display area 200. The through-hole 25 may be located to cause the distance d1 to be not more than 60% of the distance d0. The through-hole 25 may be located at the center C of the display area 200. The through-hole 25 may be located between the first area 201 and the second area 202 with the distance d1 not more than 60% of the distance d0. The through-hole 25 may be located within the first area 201 with the distance d1 not more than 60% of the distance d0. The through-hole 25 may be located within the second area 202 with the distance d1 not more than 60% of the distance d0.

FIG. 6 is a schematic diagram illustrating a simplified internal structure of the camera 11. The camera 11 may include a lens 110. The camera 11 includes an image sensor 111 that is, for example, a CCD as described above. The lens 110 focuses light (including light reflected from the subject) that enters its effective aperture, and the image sensor 111 receives the light and records an image. The diameter of the through-hole 25 may be smaller than the effective aperture of the lens 110 in the camera 11. The lens 110 in the camera 11 may have an effective aperture larger than the diameter of the through-hole 25. In a structure with the camera 11 capturing an image through the through-hole 25 in the display 20 as described above, the camera 11 is located at least on the rear of the display 20, and light traveling through the through-hole 25 is focused through the lens 110 in the camera 11 onto the image sensor 111. A through-hole 25 with a diameter smaller than the effective aperture of the lens 110 narrows the range of light to be collected onto and received by the image sensor 111.

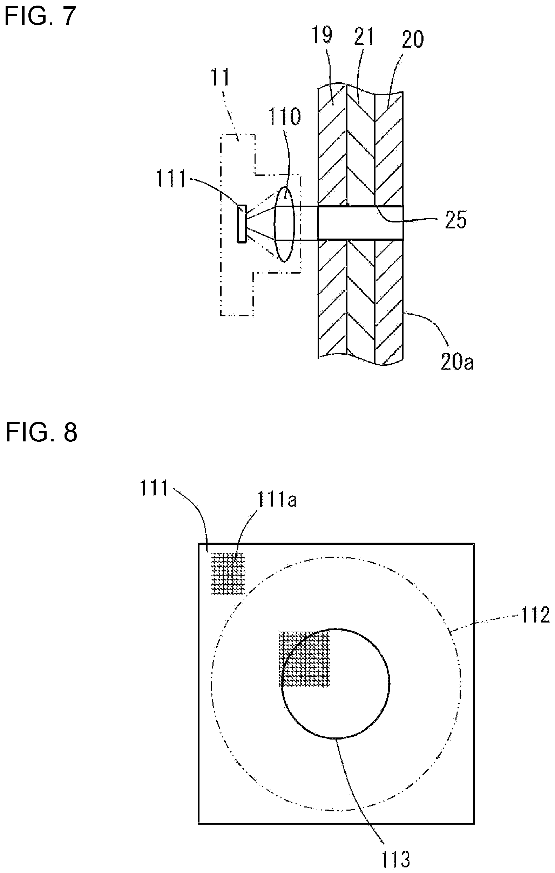

FIG. 7 is a schematic diagram illustrating light focused on the image sensor 111. The image sensor 111 is, for example, a matrix of micro light receivers 111a. In the image sensor 111 with the structure, the light receivers 111a that can receive light transmitted through the lens 110 are, for example, the light receivers 111a in the first range 112. The number of pixels to be used for the reception and recording of light by light receivers 111a within the first range 112 is referred to as the number of effective pixels of the image sensor 111. In the present embodiment, as described above, the diameter of the through-hole 25 is smaller than the effective aperture of the lens 110. Thus, the light receivers 111a in the image sensor 111 that can receive light traveling through the through-hole 25 and then through the lens 110 are the light receivers 111a in the second range 113 smaller than the first range 112. The total number of light receivers 111a within the second range 113 may be, for example, not more than 50% of the number of effective pixels.

The image captured by the camera 11 is output to the controller 24 for detection of the eyes 5 of the driver 13. The camera 11 may output, as a captured image, a group of pixels recorded by the light receivers 111a that receive light transmitted through the lens 110 after traveling through the through-hole 25. The volume of data for the captured image output from the camera 11 is smaller than that of a captured image output with the full number of effective pixels of the image sensor 111. The image processing including detecting the eyes 5 on an image with a smaller data volume reduces the computation performed by the controller 24 and thus allows faster computation.

The structure according to the present disclosure is not limited to the structure described in the above embodiments, but may be changed or altered variously. For example, the functions of the components are reconfigurable unless any contradiction arises. Multiple components may be combined into a single unit or a single component may be divided into separate units. For example, in a structure that allows the camera 11 to capture an image through the through-hole 25, the camera 11 may have the imaging direction being the direction of the image light of the display 20, or may have the imaging direction being different from the direction of the image light of the display 20.

The figures illustrating the configurations according to the present disclosure are schematic. The figures are not drawn to scale relative to the actual size of each component.

In the present disclosure, the first, the second, and others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

In one embodiment of the present disclosure, an image display module is used for a head-up display. The image display module includes a housing, a display, a barrier, and a camera. The housing includes an opening defining an eye box. The display is located in the housing. The display displays a parallax image projected toward a first eye and a second eye of a user. The barrier is located in the housing. The barrier defines image light of the parallax image to generate parallax between the first eye and the second eye. The camera is located in the housing. The camera captures an image of at least one of the first eye or the second eye of the user. The camera has an imaging direction being a direction of the image light.

In one embodiment of the present disclosure, an image display module is used for a head-up display. The image display module includes a housing, a display, a barrier, a camera, and a controller. The housing includes an opening defining an eye box. The display is located in the housing. The display displays a parallax image projected toward a first eye and a second eye of a user. The barrier is located in the housing. The barrier defines image light of the parallax image to generate parallax between the first eye and the second eye. The camera is located in the housing. The camera captures an image of at least one of the first eye or the second eye of the user. The camera has an imaging direction being different from a direction of the image light. The controller corrects distortion in a captured image captured with the camera with reference to the direction of light of the parallax image.

In one embodiment of the present disclosure, the image display module includes the display and the camera in the housing and may thus be downsized. The image display module accommodated in the housing can be installed on, for example, a movable body.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

5 eye (5L: left eye, 5R: right eye)
10 movable body
11 camera
12 three-dimensional (3D) projector (image display module)
13 driver
14 virtual image (14a: first virtual image, 14b: second virtual image)
15 windshield
16 eye box
17 three-dimensional (3D) display device
18 optical element (18a: first mirror, 18b: second mirror)
19 backlight
20 display (20a: display surface)
201L left-eye viewing area
201R right-eye viewing area
21 barrier (21a: light-blocking portion, 21b: open portion)
22 communicator
23 storage
24 controller
25 through-hole
30 optical system
40, 41 mirror
50 camera apparatus
110 lens
111 image sensor
111a light receiver
112 first range
113 second range
120 housing
121 opening
200 display area
201 first area
201L left-eye viewing area
201R right-eye viewing area
202 second area

## Claims

1. An image display module for a head-up display, the image display module comprising:
a housing including an opening defining an eye box;
a display in the housing, the display being configured to display a parallax image projected toward a first eye and a second eye of a user;
a barrier in the housing, the barrier being configured to define image light of the parallax image to generate parallax between the first eye and the second eye; and
a camera in the housing, the camera being configured to capture an image of at least one of the first eye or the second eye of the user, the camera having an imaging direction being a direction of the image light.

2. An image display module for a head-up display, the image display module comprising:
a housing including an opening defining an eye box;
a display in the housing, the display being configured to display a parallax image projected toward a first eye and a second eye of a user;
a barrier in the housing, the barrier being configured to define image light of the parallax image to generate parallax between the first eye and the second eye;
a camera in the housing, the camera being configured to capture an image of at least one of the first eye or the second eye of the user, the camera having an imaging direction being different from a direction of the image light; and
a controller configured to correct distortion in a captured image captured with the camera with reference to the direction of the image light.

3. The image display module according to claim 1 or claim 2, wherein
the camera is at a reference position in a direction of the parallax with respect to the display.

4. The image display module according to claim 3, wherein
the camera is at a position above or below the display in a vertical direction.

5. The image display module according to claim 1 or claim 2, wherein
the camera captures an image from within a display area included in the display.

6. The image display module according to claim 5, wherein
the display includes a through-hole in the display area, and
the camera captures an image through the through-hole.

7. The image display module according to claim 6, wherein
the display displays a planar image projected toward the first eye and the second eye, and the display includes a first area to display the parallax image and a second area to display the planar image, and
the through-hole is between the first area and the second area.

8. The image display module according to claim 6 or claim 7, wherein
the through-hole is on an imaginary line extending through a center of the display area in the vertical direction, and
a distance from the center of the display area to the through-hole is not more than 60% of a distance from the center of the display area to a point of intersection between a periphery of the display area and the imaginary line.

9. The image display module according to any one of claims 6 to 8, wherein
the camera includes a lens, and
the through-hole has a diameter smaller than an effective aperture of the lens.

10. The image display module, wherein
a total number of light receivers in an image sensor in the camera to receive light transmitted through the lens is not more than 50% of a number of effective pixels.

11. The image display module, wherein
the camera outputs a group of pixels recorded by the light receivers as the captured image.
